# EUROPEAN PATENT APPLICATION

(11) **EP 1 840 184 A1**
(43) Date of publication of application: **03.10.2007**
(21) Application number: 04807847.1
(22) Date of filing: 20.12.2004
(51) Int. Cl.: C09K 17/02, C09K 17/04, A01G 1/00, A01G 7/00

(54) **SOIL CONDITIONER FOR LAWN EARTH AND METHOD OF MANAGING LAWNGRASS GROWTH USING THE SOIL CONDITIONER**

(71) Applicant: Resurge Co., Ltd, Kasugai-shi, Aichi 486-0968 (JP)
(72) Inventor: MIYAGAWA, Miyuki, Resurge Co., Ltd., Kasugai-shi, Aichi 486-0968 (JP); UEDA, Ryoichi, Tokai Yuki Nosan Co., Ltd., Nagoya-shi, Aichi 466-0001 (JP)
(74) Representative: Kehl, Günther
(86) International application number: PCT/JP2004/019492
(87) International publication number: WO 2006/067861

(57) **Abstract**

Provided is a soil conditioner for providing conditions suitable for growth of turf in lawn-growing soil constituting the surface layer of developed land for a lawn-covered athletic field, and for maintaining the conditions over a long period of time. The soil conditioner is **characterized by** containing a carbonized substance which has a percent carbonization of at least 90%, which has a porous, amorphous structure including numerous pores, and which has substantially no hydroxyl group, wherein the pores contain micropores having a pore size of 0.1 µm or less in an amount of at least 25%, and the micropores are in communication with one another. The soil conditioner is employed in the form of powder or particles in a mode in which the soil conditioner is mixed with lawn-growing soil, a mode in which the soil conditioner is spread on the surface layer of lawn, or a mode in which the soil conditioner is charged into numerous holes provided in lawn.

## Description

### Technical Field

The present invention relates to a soil conditioner employed for maintaining the soil of an athletic field in conditions suitable for growth of turf over a long period of time, the athletic field being built by installing pieces of turf on the surface of soil constituting the surface layer of developed land (hereinafter the athletic field will be referred to as a "lawn-covered athletic field"); and to a method for managing growth of turf (lawngrass) by use of the soil conditioner.

### Background Art

A lawn-covered athletic field (e.g., a golf course), whose surface is entirely covered with turf, is built by densely installing pieces of turf on the surface of soil constituting the surface layer of a large tract of developed land. Such a lawn-covered athletic field, which is fundamentally used repeatedly over a long period of time, is continually subjected to tread pressures from players, or is continually subjected to the weight of landscaping machinery. Therefore, soil constituting the surface layer of such a lawn-covered athletic field (hereinafter such soil may be referred to as "lawn-growing soil") is gradually transformed into a hard, rock-like state, impairing soil conditions suitable for growth of turf. This impairment inhibits growth of turf roots in the lawn-covered athletic field, and weakens the entirety of the turf, which could cause frequent occurrence of disease and insect damage, or death of the turf.

A measure to cope with such problems is application of an agrochemical or a fertilizer to the lawn. However, application of an agrochemical or a fertilizer is only a temporary measure, and thus cannot serve as fundamental means for restoring the impaired soil conditions to good soil conditions for growth of turf. Employment of an agrochemical for restoring the impaired soil conditions to good soil conditions for growth of turf would cause environmental contamination of the soil, and would have adverse effects on growth of turf, and as well on growth of other plants.

Employment of a fertilizer for restoring the impaired soil conditions to good soil conditions for growth of turf would provide an excessive amount of a fertilizer relation to appropriate growth of turf, leading to enrichment of nutrients in the soil. As a result, rivers, lakes, etc. would be contaminated with such nutrient-enriched soil, and the quality of water in the rivers, lakes, etc. would be deteriorated, resulting in worsening of the environment of the lawn-covered athletic field and the surroundings thereof.

After turves have once been installed on soil (lawn-growing soil) constituting the surface layer of developed land, the resultant lawn-covered athletic field is required to be used over a long period of time (e.g., 10 and some years or longer); i.e., the lawn-covered athletic field is required to be used almost permanently. Fundamental modification of the lawn-covered athletic field could be carried out by aeration of the lawn-growing soil or exchanging the soil with new soil, followed by covering of the resultant lawn-growing soil with lawn. However, re-covering of the entire surface of the thus-regenerated soil with lawn is impossible in terms of practical use and production cost. Therefore, in a golf course, whose entire surface is generally covered with green turf, many efforts are required for managing growth of turf. In view of the foregoing, various attempts have been made to improve lawn-growing soil.

As has been recognized, ideally, lawn-growing soil constituting the surface layer of a lawn-covered athletic field contains a solid phase, a gas phase, and a liquid phase in proportions of 2/4, 1/4, and 1/4, respectively so as to provide good conditions for growth of turf. Therefore, various attempts have been made to form soil containing a solid phase, a gas phase, and a liquid phase in the aforementioned proportions; i.e., soil suitable for providing good conditions for growth of turf. For example, there have been proposed a method in which earth is mixed with an appropriate amount of sand, to thereby form lawn-growing soil; and a method in which such lawn-growing soil or sand is mixed with an appropriate amount of a humic material (e:g., peat moss), to thereby form lawn-growing soil exhibiting improved water retention ability. In recent years, the latter type of lawn-growing soil has become of interest, and lawn-growing soil prepared by mixing sand with peat moss in an amount of 10 vol.% or thereabouts has often been employed.

However, the latter lawn-growing soil (i.e., lawn-growing soil prepared by mixing an appropriate amount of a humic material (e.g., peat moss) with lawn-growing soil formed through appropriate mixing of earth and sand, or with lawn-growing soil predominantly containing sand) raises serious problems, in that a water-impermeable layer tends to be formed in the soil as a result of generation of, for example, silt components attributed to grown fine roots of turf or organic substances contained in the soil, and that a plow pan (i.e., a locally-formed, hard compacted layer of soil) tends to be formed. In a method for coping with such problems, the lawn-growing soil is mixed with adsorptive carbon (e.g., fumed carbon). Preferably, adsorptive carbon (i.e., conventionally employed activated carbon) is in the form of a porous carbonized substance having numerous pores of large size (on the µm level) so as to attain high adsorption ability.

However, when such adsorptive carbon is employed in the lawn-growing soil, silt components attributed to grown fine roots of turf or organic substances contained in the soil enter large-size pores of the adsorptive carbon, and the pores are clogged at an early stage. As a result, the adsorptive carbon soon loses its adsorption ability, and remains in the lawn-growing soil as a mere solid matter. Organic substances or silt components contained in the lawn-growing soil, which have hydroxyl groups, form hydrogen bonds with water, and remain in the pores of the adsorptive carbon. Therefore, the pores are filled with stagnant water. When a large amount of adsorptive carbon is employed, the carbon remains in the soil in the form of a layer, and is entangled with undegradable residual roots or residues to thereby facilitate formation of a water-impermeable layer. Therefore, the resultant lawn-growing soil fails to grow active roots of turf, and causes frequent occurrence of disease and insect damage.

The present inventors have developed a growth promoter for providing and maintaining good conditions for agricultural crop growth in farm soil in the field of agriculture, and have already applied for a patent for the growth promoter (see JP2001-122712A).

The growth promoter is employed in soil for growing agricultural crops (e.g., wet rice and vegetables), and contains porous activated carbon exhibiting specific properties and having numerous pores. The present inventors have conducted extensive studies based on knowledge obtained through development of the growth promoter, and as a result have developed a carbonized substance which provides good conditions for growth of turf in lawn-growing soil for a lawn-covered athletic field. An object of the present invention is to provide the carbonized substance as a soil conditioner for lawn-growing soil.

### Disclosure of the Invention

The present invention provides a soil conditioner for providing conditions suitable for growth of turf in lawn-growing soil constituting a lawn-covered athletic field and for maintaining the conditions over a long period of time; and a method for managing growth of turf by use of the soil conditioner.

The soil conditioner of the present invention comprises a carbonized substance which has a percent carbonization of at least 90%. The soil conditioner has a porous, amorphous structure including numerous pores, and which has substantially no hydroxyl group, wherein the pores contain communicating micropores having a pore size of 0.1 µm or less in an amount of at least 25%. Preferably, the soil conditioner comprises a carbonized substance of amorphous structure which is formed through carbonization of a plant or plant-originating material (e.g., palm shell or sawdust) and which has a percent carbonization of at least 90%, and has a pH of 9.0 to 11.0, wherein the aforementioned micropores have a pore size of sub-microns (i.e., on the nm levels).

When in use, the soil conditioner of the present invention is in the form of powder or particles having an appropriate particle size. Examples of the mode of use of the soil conditioner include a mode in which the soil conditioner is uniformly mixed with, for example, lawn-growing soil formed through mixing of earth and sand or lawn-growing soil predominantly containing sand (soil containing a mixture of sand and peat moss); a mode in which the soil conditioner is uniformly spread on the surface of lawn-growing soil; and a mode in which the soil conditioner is charged, singly or in the form of a mixture with earth, into numerous cylindrical holes provided at appropriate locations of lawn. The soil conditioner is employed in an amount of 3 to 15% by volume on the basis of the entirety of lawn-growing soil. When the soil conditioner is employed in lawn-growing soil, the soil conditioner exhibits the below-described properties in the soil, provides the soil with good conditions for growth of turf, and maintains the good conditions over a long period of time.
(1) The soil conditioner has a percent carbonization of 90% or more and virtually no hydroxyl group as functional group, and thus exhibits a water retention of 5% or less in its micropores. In the lawn-growing soil, water present in the surroundings of micropores of the soil conditioner is taken in the micropores by capillary action, and water molecule clusters constituting the water taken in the micropores are fragmented through the effect of free electrons (e⁻) induced by the carbonized substance. Water formed of the thus-fragmented water molecule clusters is released, under its own weight, from openings of the micropores to the lawn-growing soil. The micropores from which the water has been released exhibit a water retention of 5% or less, and always serve as almost hollow so as to form air microcavities.
(2) The lawn-growing soil, which is formed of aggregates of particles having different particle sizes, has numerous capillary pores as a whole, and includes hydroxyl groups. Therefore, water released from micropores of the soil conditioner to the lawn-growing soil forms hydrogen bonds with hydroxyl groups of the lawn-growing soil, and is retained therein; i.e., the lawn-growing soil exhibits high water retention. The thus-retained water is utilized for growth of turf. Further, the thus-retained water has been circulated through micropores of the soil conditioner. Therefore, the retained water contains a large amount of dissolved oxygen as a result of dissolution of a large amount of air present in the micropores, and promotes supply of water or oxygen to turf roots. Thus, the water retained in the soil greatly contributes to turf in terms of metabolic energy, and controls conditions for, for example, sound growth of turf and maintenance thereof.
(3) Numerous micropores of the soil conditioner are in the form of ultramicropores having a pore size of 0.1 µm or less; i.e., a pore size of sub-microns (i.e., on the nm levels), and therefore the micropores prevent them from being invaded by fine roots or silt obtained through decay or decomposition of organic substances (generally dead residual roots) generated during growth of turf. Thus, the micropores are not clogged with such fine roots or silt, and maintain the aforementioned water circulating effect over a long period of time. Therefore, the soil conditioner maintains, over a long period of time, the effect of providing the lawn-growing soil with good conditions for growth of turf.
(4) Rainwater or water sprinkled onto a lawn-covered athletic field is taken, through the lawn-growing soil, in micropores of the soil conditioner. Water molecule clusters of water taken in the micropores are fragmented in the micropores. Water formed of the thus-fragmented water molecule clusters and containing a large amount of dissolved oxygen is circulated to the lawn-growing soil. Thus, the micropores are returned to hollow air microcavities, and are filled with fresh air. The soil conditioner, which operates as described above over a long period of time in a repeated manner, circulates, to the lawn-growing soil, water which contains a large amount of dissolved oxygen and causes no decay. The thus-circulated water promotes growth of turf or propagation of soil fungi, since turf roots or soil fungi in the rhizosphere favorably: absorb water and oxygen. Therefore, the lawn-growing soil containing the soil conditioner is continuously activated; i.e., the lawn-growing soil is always provided with good conditions for growth of turf.
(5) According to a water clearance theory, when water passes through a very narrow clearance, it does not freeze even at a temperature as low as -10°C, and when water passes through a much narrower clearance, it does not freeze even at a temperature as low as -80°C. When water molecule clusters are fragmented, the thus-fragmented water molecules rotate and potentially increase kinetic energy for movement. Water formed of the thus-fragmented water molecule clusters serves as free water which maintains good conditions for turf roots in the lawn-growing soil or soil fungi coexisting therewith, and contributes to sound growth of turf. Water released from micropores of the soil conditioner to the lawn-growing soil corresponds to such water (i.e., water formed of fragmented water molecule clusters), and, by virtue of the aforementioned properties, the thus-released water provides the lawn-growing soil with good conditions for growth of turf.
(6) Fundamental functions generally expected to water are based on free water. Conversion of free water to bound water may lead to contamination of the water. The soil conditioner includes numerous communicating micropores having a very small pore size. The micropores, whose inner walls have no hydroxyl group, absorb bound water by capillary action. Water molecule clusters constituting the thus-absorbed water are fragmented to form theoretically minimum clusters (each including 4.4 molecules and having a size of 7 A to 8 A), and the thus-formed clusters are released to the lawn-growing soil. The soil conditioner has an amorphous (non-crystalline) planar molecular structure, and has a molecular frame formed through bonding between carbon and oxygen. Conceivably, positive and negative poles are dispersed in the molecular frame, and the molecular frame is permanently polarized. Therefore, the soil conditioner attracts various substances by means of electrostatic attraction (Coulomb attraction) attributed to such polarization. Specifically, the soil conditioner powerfully removes, from the lawn-growing soil, various molecules causing environmental degradation (e.g., contaminated bound water) for decomposition thereof.
(7) The soil conditioner generates a specific frequency (far-infrared rays), and, through the effect of the thus-generated far-infrared radiation, surrounding water molecule clusters are fragmented by free electrons (e⁻) present in the vicinity of the soil conditioner. The synergy between the thus-fragmented water molecule clusters and free electrons (e⁻) in an electromagnetic field actualizes the potential power (potential energy) of water. By virtue of such specific properties, the soil conditioner extraordinarily acts, in the form of metabolic energy, on lawn of the lawn-covered athletic field, and conveys water, nutrients, or a small amount of nutritional elements to lawn so as to meet selective requirement of lawn, for smooth cyclical distribution. Thus, the soil conditioner exhibits the effect of maintaining lawn constituting the lawn-covered athletic field in a healthy state, the effect of restoring the lawn to a healthy state, and the effect of growing the lawn.
(8) Similar to the case of management of agricultural crop growth, a critical point in managing growth of turf is to increase the partial pressure of water or oxygen applied to turf roots, to thereby enhance the efficiency of absorption of various nutritional elements and essential trace elements through turf roots. Bound water present in the lawn-growing soil is taken in micropores of the soil conditioner, and water molecule clusters of the water are immediately fragmented. Water formed of the thus-fragmented water molecule clusters is circulated to the lawn-growing soil, and thus the water rapidly exhibits its function in the lawn-growing soil. Carbohydrates produced in lawn through photosynthesis are bound to nitrogen drawn through turf roots to form amino acids, and condensation of the thus-formed amino acids produces proteins, which are fundamental substances of the cell protoplasm (nitrogen assimilation). Other nutrients and essential trace elements present in the lawn-growing soil are absorbed through turf roots and assimilated, so that the entirety of the structure and function of lawn is well balanced. Thus, the soil conditioner continuously maintains the lawn-growing soil in good conditions for growth of turf. Therefore, in management of growth of turf, the amount of a fertilizer or agrochemical employed can be reduced, and labor cost can be reduced.

### Brief Description of the Drawings

Fig. 1 is a photocopy of an enlarged electron micrograph showing a portion of the surface of a soil conditioner according to one embodiment of the present invention.
Fig. 2 is a photocopy of an enlarged electron micrograph showing a portion of the surface of activated carbon, which is generally employed as an adsorbent.
Fig. 3 is a photocopy of a photograph showing the state of growth of turf in the case where a soil conditioner (carbonized substance) according to one embodiment of the present invention is employed.
Fig. 4 is a photocopy of a photograph showing the state of growth of turf in the case where the soil conditioner is not employed.

### Best Mode for Carrying Out the Invention

The soil conditioner of the present invention is produced through the following production process: palm shell and sawdust, serving as raw materials for carbonization, are subjected to carbonization which is generally employed for carbonization of palm shell, and the resultant fumed product is heat treated under vacuum for about seven hours. The carbonized substance produced through the aforementioned production process has a porous, amorphous structure including numerous pores. In the production process, when the heat treatment temperature is appropriately regulated within a range of 1,000°C to 1,300°C, different types of carbonized substances having a percent carbonization of 85% to 95% and a pH of 8.5 to 11.5 can be produced.

The soil conditioner according to one embodiment of the present invention comprises a carbonized substance which has a percent carbonization of at least 90% (preferably 95%), which has a porous, amorphous structure including numerous pores, and which has substantially no hydroxyl group. The pores contain communicating micropores having a pore size of 0.1 µm or less in an amount of at least 25%, and have substantially no hydroxyl group. The soil conditioner has a pH of 8.5 to 11.5, preferably 9.0 to 11.0. Preferably, the aforementioned micropores are ultramicropores having a pore size of sub-microns (i.e., on the nm level).

The soil conditioner is employed in the form of powder or particles having an appropriate particle size. For example, the soil conditioner, which contains the aforementioned carbonized substance, is employed in the form of powder (e.g., 0.07 mm or less) or in the form of particles (e.g., 0.1 mm to 0.5 mm, 0.6 to 1.9 mm, or 2 mm or more). The mode of use of the soil conditioner is appropriately selected in consideration of the state of lawn-growing soil. Examples of the mode of use of the soil conditioner include a mode in which the soil conditioner is uniformly mixed with lawn-growing soil (containing earth, sand, or an earth-sand mixture) constituting the surface layer of developed land; a mode in which the soil conditioner is uniformly spread on the surface of lawn-growing soil; and a mode in which the soil conditioner is charged, singly or in the form of a mixture with earth or sand, into numerous cylindrical holes provided at appropriate locations of lawn which has been used for a long period of time. In the case where the soil conditioner is mixed with lawn-growing soil, the amount by volume of the soil conditioner employed is 3 to 15%, preferably 5 to 10%, on the basis of the entirety of the lawn-growing soil. In the case where the soil conditioner is charged into numerous cylindrical holes provided in a lawn, the amount of the soil conditioner employed is 0.1 L (liter) to 0.5 L (liter), preferably 0.3 L (liter), per m² of the lawn.

### (Pore size distribution of soil conditioner)

The soil conditioner according to one embodiment of the present invention was subjected to measurement in terms of proportions of pores having different pore sizes. The results (results of pore size distribution measurement) are shown in Table 1. The soil conditioner has a percent carbonization of 95%. For the purpose of indicating that the soil conditioner of the present embodiment is a specific substance including pores having a very small pore size (ultramicropores), Table 1 also shows proportions of different-size pores of ceramic powder particles, which are generally employed as a soil conditioner. Pore size was measured by means of a mercury-intrusion-type pore size distribution measuring apparatus. In Table 1, the column "Example" corresponds to the soil conditioner according to the present embodiment, and the column "Comparative Example" corresponds to the soil conditioner generally employed which contains the ceramic powder particles.

**Table 1**

| Pore size distribution measurement results | | |
|---|---|---|
| Pore size (µm) | Soil conditioner | |
| | Example (%) | Comparative Example (%) |
| ≥0.1 | 27.075 | 4.713 |
| 0.1 - 0.2 | 5.752 | 1.325 |
| 0.2 - 0.5 | 8.403 | 5.965 |
| 0.5 - 1 | 5.973 | 20.655 |
| 1 - 2 | 14.381 | 33.616 |
| 2-5 | 10.842 | 19.002 |
| 5 - 10 | 1.320 | 2.504 |
| 10 - 20 | 3.761 | 1.870 |
| 20 - 50 | 5.752 | 2.080 |
| 50 | 15.929 | 7.364 |

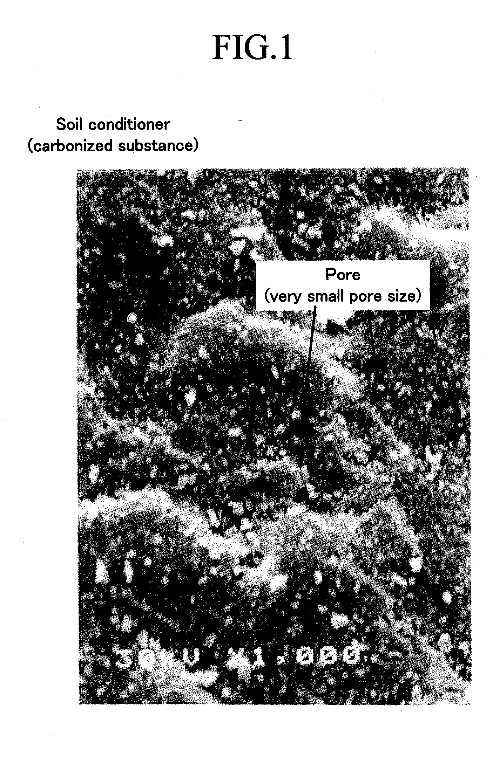

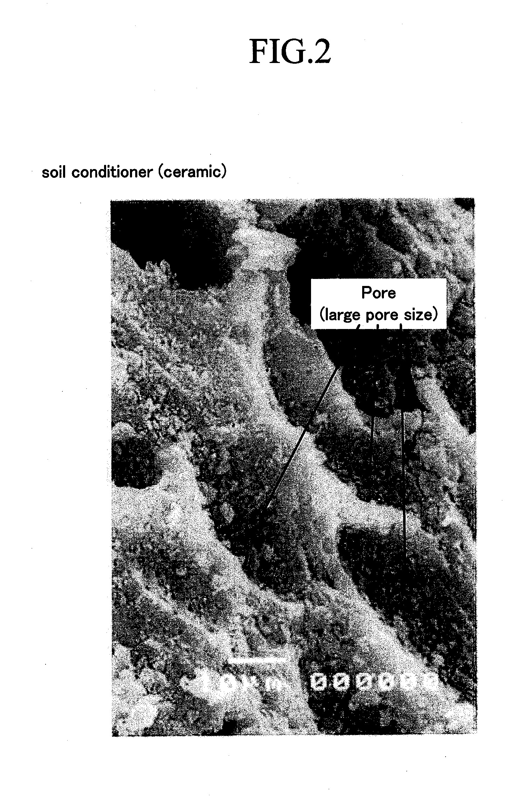

Figs. 1 and 2 are enlarged electron micrographs respectively showing a portion of the surface of the soil conditioner according to one embodiment of the present invention and a portion of the surface of activated carbon which is generally employed as an adsorbent. These micrographs are employed for observation of the porosity (pore distribution) of the soil conditioner and the activated carbon.

### (Physical properties of soil conditioner)

The carbonized-substance-containing soil conditioner according to one embodiment of the present invention (i.e., the soil conditioner of the present invention: Example) and the ceramic soil conditioner (generally employed soil conditioner: Comparative Example), which had been subjected to pore size distribution measurement, were evaluated in terms of physical properties. The results are shown in Table 2. In the below-described evaluation items, water retention was evaluated on the basis of water retention test (pF test). Water retention test (pF test) was performed according to the Japanese Geotechnical Society Standard (pF test method for soil, JSP T 151-1990, pressure method (pF 1.8 to 3.0), centrifugation method (pF 3.0 to 4.2)). Water retention was evaluated on the basis of water content by volume (%) (pF 1.8 to 4.2). For evaluation of porosity (capillary porosity and non-capillary porosity) in the evaluation items, actual volume of a sample which had been converted into a water-containing farm soil state (pF 1.8) through the pressure method was measured by means of a soil three-phase meter. The thus-obtained liquid phase proportion was regarded as capillary porosity and gas phase was regarded as non-capillary (coarse pore) porosity, respectively. In the evaluation items, pore volume was measured by means of a mercury-intrusion-type pore size distribution measuring apparatus.

**Table 2**

| Physical properties of soil conditioner | | |
|---|---|---|
| Evaluation items | Soil conditioner | |
| | Example (%) | Comparative Example (%) |
| Water retention | 4.7 | 26.0 |
| Capillary porosity | 22.5 | 35.0 |
| Non-capillary porosity | 47.5 | 43.3 |
| Pore volume | 33.7 | 6.0 |
| Bulk density | 0.48 | 0.52 |

### (Soil improvement test)

The present test employed a mode in which the soil conditioner of the present invention is mixed with lawn-growing soil. In the present test, the soil improvement effect of the carbonized-substance-containing soil conditioner according to one embodiment of the present invention (Example) was evaluated through comparison between the case where the soil conditioner was employed and the case where the soil conditioner was not employed.

In the present test, soil prepared by mixing sand (size: 0.5 to 1.0 mm) with peat moss (10% by volume) was employed as lawn-growing soil (non-modified soil). In the case of employment of the soil conditioner, the soil conditioner (5% by volume) was mixed with the non-modified soil, to thereby prepare modified soil. In the present test, each of the non-modified soil and the modified soil was installed on a developed substratum so that the thickness of the resultant soil layer was about 10 cm, to thereby develop two test lands having different iawn-growing soils. In the present test, turf was installed on the surface of the lawn-growing soil of each of the thus-developed lands in a manner similar to the case of an actual golf course, to thereby build two test lawn-covered golf courses on a very small scale (Example and Comparative Example).

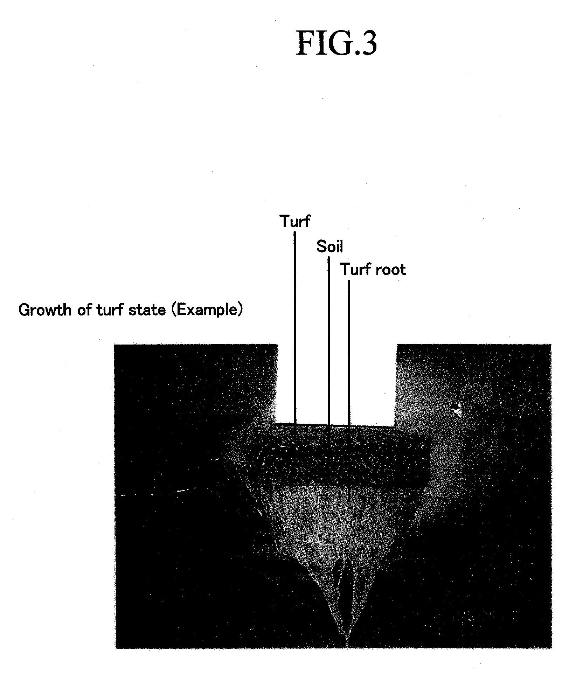

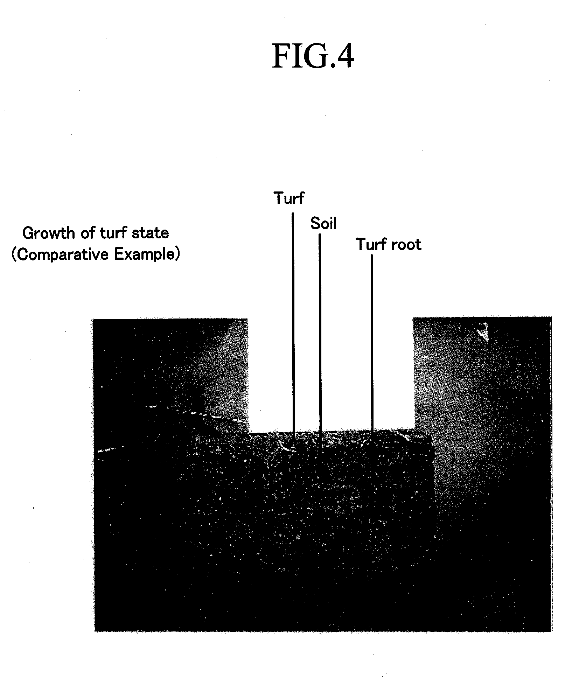

In each of the test lawn-covered golf courses, golf was played at a frequency similar to that in the case of a typical golf course, and water was sprinkled periodically for management of growth of turf. During the test, the state of growth of turf was observed in a time-course manner, and change in physical properties of lawn rhizospheric soil was measured in a time-course manner. The results (time-course change in physical properties of rhizospheric soil) are shown in Table 3 (Example) and Table 4 (Comparative Example). Figs. 3 and 4 are photographs showing the state of growth of turf at the time of the final time-course measurement.

**Table 3**

| Time-course change in physical properties of rhizospheric soil | | | | |
|---|---|---|---|---|
| (Example) | | | | |
| Physical properties | Initial | 1 year later | 2 years later | 3 years later |
| Saturated water flow rate (mm/h) | 603 | 283 | 213 | 199 |
| Water retention (%) | 17.1 | 20.1 | 21.5 | 23.2 |
| Total porosity (%) | 42.6 | 45.8 | 44.4 | 45.8 |
| Air porosity (%) | 27.1 | 25.5 | 23.2 | 22.2 |
| Capillary porosity (%) | 15.5 | 20.3 | 21.2 | 23.6 |
| Organic substances (%) | - | 0.5 | 0.7 | 0.7 |

**Table 4**

| Time-course change in physical properties of rhizospheric soil | | | | |
|---|---|---|---|---|
| (Comparative Example) | | | | |
| Physical properties | Initial | 1 year later | 2 years later | 3 years later |
| Saturated water flow rate (mm/h) | 938 | 112 | 38 | 30 |
| Water retention (%) | 13.1 | 20.0 | 23.0 | 31.1 |
| Total porosity (%) | 40.5 | 48.3 | 46.6 | 49.6 |
| Air porosity (%) | 27.4 | 20.7 | 13.9 | 7.6 |
| Capillary porosity (%) | 13.1 | 27.6 | 32.7 | 42.0 |
| Organic substances (%) | - | 0.5 | 0.8 | 1.4 |

### (Discussion)

(1) The non-modified soil for testing is prepared by mixing sand (size: 0.5 to 1.0 mm) with peat moss (10% by volume). In the case of the non-modified soil (i.e., lawn-growing soil of Comparative Example), saturated water flow rate (mm/h) is initially high, but is considerably reduced year after year, and is reduced to a very low level in the final measurement year. Water retention (%) (represented by water content) tends to gradually increase year after year, and this tendency is expected to continue to the final measurement year or later. In contrast, in the case of the modified soil (Example), saturated water flow rate is gradually reduced year after year, but is almost converged to a predetermined level (about 200 mm/h) in the final measurement year. Water retention tends to slightly increase year after year, but time-course change is small, and water retention is maintained within a range of 20 to 25%.
(2) In each case of the non-modified soil and the modified soil, time-course change in total porosity (%) is small. However, in the case of the non-modified soil, air porosity (%), which greatly contributes to the gas phase of the lawn-growing soil, is considerably reduced year after year. In contrast, in the case of the modified soil, air porosity (%) is gradually reduced year after year, but is converged toward a certain level in the final measurement year. Therefore, air porosity (%) is expected to be maintained at a constant level (about 20%) in the final measurement year or later.
(3) In the case of the non-modified soil, capillary porosity (%), which greatly contributes to the liquid phase of the lawn-growing soil, is considerably increased year after year. In contrast, in the case of the modified soil, a time-course increase in capillary porosity (%) is suppressed, and capillary porosity is gradually increased and converged to a predetermined level of about 25 (%) in the final measurement year or later. The amount of organic substances remaining in the non-modified soil is considerably increased year after year. In contrast, a time-course increase in the amount of organic substances remaining in the modified soil is almost completely suppressed, and the amount is converged to a predetermined level of about 0.7 (%) in the final measurement year or later.

### (Functions of the soil conditioner of the present invention)

Needless to say, lawn-growing soil (non-modified soil) prepared by mixing sand (size: 0.5 to 1.0 mm) with peat moss (10% by volume) exhibits low water retention ability or fertilizer retention ability, which is attributed to the composition of the soil. When such lawn-growing soil is employed, water sprinkling or fertilization tends to be performed excessively for managing growth of turf, and therefore anaerobic conditions are gradually (layer-by-layer) established in the lawn-growing soil year after year, resulting in insufficient growth of turf roots and inhibition of turf root elongation. This causes frequent occurrence of disease and insect damage in turf, leading to death of the turf. These problems are caused by the absence of pores which function as air microcavities (i.e., pores allowing air passage) in the lawn-growing soil. Pores formed between adjacent sand particles or earth particles in the lawn-growing soil-which are microspaces in which growing roots of densely installed turf elongate competitively-are not equivalent to non-capillary pores, and are immediately lost by filling of the pores with turf roots and by tread pressures from players, etc. Therefore, since influx of air into the lawn-growing soil is prevented, and rainwater or sprinkled water is retained in the soil, the soil gradually becomes anaerobic.

A ceramic soil conditioner or another soil conditioner (e.g., peat-bark, zeolite, or pearlite), which includes hydroxyl groups (OH), has the ability to bind to water through hydrogen bonding. Therefore, when such a soil conditioner is employed in lawn-growing soil, water in the soil (i.e., rainwater or water sprinkled onto the lawn) is bound to the soil conditioner, and is present in the form of bound water in pores having a large pore size on the µm level or more. Thus, water in the lawn-growing soil is retained in the soil conditioner in the form of bound water, and the pores, which are clogged with the bound water, do not function as air microcavities. The bound water gradually becomes anoxic, and causes decay of fine roots of turf entering the pores, thereby promoting clogging of the pores. Clogging of the pores is also promoted by invasion of fine soil powder into the pores. As a result, the pores no longer function as air microcavities.

In contrast, the soil conditioner according to one embodiment of the present invention (Example) does not affect water retention of lawn-growing soil, and has a specific pore size distribution so that the conditioner can improve air circulation in the soil. The soil conditioner includes numerous ultramicropores having a pore size on the order of 0.1 µm or less (i.e., on the nm level). Bound water is not retained in the ultramicropores, and invasion of turf roots or fine soil powder into the ultramicropores is prevented. Therefore, without being clogged, the ultramicropores exist in the form of communicating pores, and function as air microcavities over a long period of time.

Thus, the soil conditioner allows the lawn-growing soil to pass air, and provides aerobic conditions to the soil so as to prevent the soil from being in anaerobic conditions. Under such soil conditions, turf roots absorb a required amount of water and necessary nutrients, and turf resistant to disease and insect damage is sufficiently grown. In the lawn-growing soil under such good conditions, degenerated residual roots are degraded to form nutrients, and the thus-formed nutrients are utilized for growth of turf. Thus, the amounts of an agrochemical and a fertilizer used for management of growth of turf can be reduced by employing the soil conditioner. Therefore, employment of the soil conditioner can considerably reduce efforts and cost required for management of growth of turf.

Numerous micropores included in the soil conditioner are in the form of communicating ultramicropores having no hydroxyl group and having a pore size on the order of µm or less (i.e., on the nm level). Water present in the lawn-growing soil is taken in the ultramicropores by capillary action, but the water is not retained in the ultramicropores in the form of bound water. Since the ultramicropores have the ability to fragment water molecule clusters of the thus-taken water, water molecule clusters of the water which has been taken in the ultramicropores are fragmented to form, for example, minimum molecule clusters (each including 4.4 molecules and having a size on the nm level), and water formed of the resultant clusters is returned to the lawn-growing soil. Thus, the soil conditioner provides the lawn-growing soil with good conditions for growth of turf.

The soil conditioner has no, crystalline structure (amorphous structure), and contains a small amount of oxygen in its molecular frame. Therefore, conceivably, positive and negative poles are dispersed in the molecular frame, and the molecular frame is permanently polarized, whereby large amounts of free electrons are induced to the surroundings of the soil conditioner. Thus, the soil conditioner attracts various substances by electrostatic attraction (Coulomb attraction) attributed to such polarization, and by free electrons (e⁻) around the soil conditioner. Specifically, the soil conditioner has the ability to powerfully attract, from the lawn-growing soil, various molecules causing environmental degradation (in particular, bound water formed of large water molecule clusters), and to fragment the water molecule clusters into free water. Therefore, the soil conditioner fragments water molecule clusters of bound water contained in the lawn-growing soil and causing environmental degradation in the soil. The thus-obtained free water is returned to the lawn-growing soil. Accordingly, the soil conditioner provides the lawn-growing soil with good conditions for growth of turf.

## Claims

1. A soil conditioner for providing conditions suitable for growth of turf in lawn-growing soil constituting the surface layer of developed land for a lawn-covered athletic field, and for maintaining the conditions over a long period of time, the soil conditioner being **characterized by** comprising a carbonized substance which has a percent carbonization of at least 90%, which has a porous, amorphous structure including numerous pores, and which has substantially no hydroxyl group, wherein the pores contain micropores having a pore size of 0.1 µm or less in an amount of at least 25%, and the micropores are in communication with one another.

2. A soil conditioner according to claim 1, wherein the carbonized substance is formed through carbonization of a plant or plant-originating material and having a percent carbonization of 95% or more, and which has a pH of 9.0 to 11.0.

3. A method for managing growth of turf, **characterized by** comprising employing a soil conditioner as recited in claim 1 or 2, wherein the soil conditioner is employed in the form of powder or particles in a mode in which the soil conditioner is mixed with lawn-growing soil, a mode in which the soil conditioner is spread on the surface layer of lawn, or a mode in which the soil conditioner is charged into numerous holes provided in lawn; and the amount of the soil conditioner employed in lawn-growing soil is 3 to 15% by volume on the basis of the entirety of the soil.
